# EUROPÄISCHE PATENTSCHRIFT

(11) **EP 3 735 832 B1**
(45) Veröffentlichungstag und Bekanntmachung des Hinweises auf die Patenterteilung: **09.10.2024**
(21) Anmeldenummer: 19173582.8
(22) Anmeldetag: 09.05.2019
(51) Int. Cl.: A23C 9/00, A01J 11/10, A23C 9/142, A23C 9/152

(54) **HERSTELLUNG VON KONDENSMILCH MIT VERBESSERTEM GESCHMACK**
PROCESS FOR THE PRODUCTION OF EVAPORATED MILK WITH IMPROVED TASTE
FABRICATION DEN LAIT CONDENSÉ AVEC GÔUT AMÉLIORÉ

(43) Veröffentlichungstag der Anmeldung: 11.11.2020
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 0 435 822
- US-A- 5 503 865
- US-A1- 2007 166 447
- DATABASE GNPD [online] MINTEL; 29 June 2016 (2016-06-29), ANONYMOUS: "Condensed Milk", XP055615349, retrieved from www.gnpd.com Database accession no. 4108967
- DATABASE GNPD [online] MINTEL; 2 June 2011 (2011-06-02), ANONYMOUS: "Condensed Milk", XP055615375, retrieved from www.gnpd.com Database accession no. 1559807
- DATABASE GNPD [online] MINTEL; 4 March 2005 (2005-03-04), ANONYMOUS: "Condensed Milk", XP055615384, retrieved from www.gnpd.com Database accession no. 10209824
- VAN DER HORST H C ET AL: "Use of nanofiltration for concentration and demineralization in the dairy industry: Model for mass transport", JOURNAL OF MEMBRANE SCIENCE, ELSEVIER BV, NL, vol. 104, no. 3, 31 August 1995 (1995-08-31), pages 205 - 218, XP004041309, ISSN: 0376-7388, DOI: 10.1016/0376-7388(95)00041-A
- DONALD J MCMAHON ET AL: "Food Structure Effects of Phosphate and Citrate on the Gelation Properties of Casein Micelles in Renneted Ultra- High Temperature (UHT) Sterilized Concentrated Milk Recommended Citation", MILOSLAV FOOD STRUCTURE, 1 January 1991 (1991-01-01), XP055615553, Retrieved from the Internet <URL:https://pdfs.semanticscholar.org/e272/923421cda9a2692d9d17b26b5d9bf38b8251.pdf?_ga=2.249225920.672396372.1566894864-1114392784.1560426277>
- MOSHE ROSENBERG: "Current and future applications for membrane processes in the dairy industry", TRENDS IN FOOD SCIENCE & TECHNOLOGY, vol. 6, no. 1, 1 January 1995 (1995-01-01), pages 12 - 19, XP055197852, ISSN: 0924-2244, DOI: 10.1016/S0924-2244(00)88912-8
- PAVAN KUMAR ET AL: "Perspective of Membrane Technology in Dairy Industry: A Review", ASIAN-AUSTRALASIAN JOURNAL OF ANIMAL SCIENCES., vol. 26, no. 9, 1 September 2013 (2013-09-01), KR, pages 1347 - 1358, XP055329545, ISSN: 1011-2367, DOI: 10.5713/ajas.2013.13082
- V.C. STEBNITZ ET AL: "The Age Thickening of Sweetened Condensed Milk", JOURNAL OF DAIRY SCIENCE., vol. 19, no. 2, 1 February 1936 (1936-02-01), US, pages 101 - 115, XP055615850, ISSN: 0022-0302, DOI: 10.3168/jds.S0022-0302(36)93042-4
- RUTH SAMEL ET AL: "The age-thickening of sweetened condensed milk: III. The effect of ions", JOURNAL OF DAIRY RESEARCH, vol. 29, no. 3, 1 October 1962 (1962-10-01), GB, pages 269 - 277, XP055615758, ISSN: 0022-0299, DOI: 10.1017/S0022029900011080

## Beschreibung

### GEBIET DER ERFINDUNG

Die Erfindung befindet sich auf dem Gebiet der Milchindustrie und betrifft ein Verfahren zur Herstellung einer Kondensmilch mit vermindertem mineralisch-bitterem Geschmack.

### TECHNOLOGISCHER HINTERGRUND

Kondensmilch oder evaporierte Kondensmilch, die man auch als Dosenmilch oder Büchsenmilch bezeichnet, wird aus Milch durch Reduktion des Wassergehaltes erhalten. Sie wurde ab der Mitte des 19. Jahrhunderts als Konserve hergestellt und vertrieben, da frische Milch nur kurze Zeit gelagert werden konnte. Das ursprüngliche Herstellungsverfahren beinhaltete die Zuführung von bis zu 45 % Zucker nach dem eigentlichen Kondensierungsvorgang, wodurch die sehr dickflüssige gezuckerte Kondensmilch entstand. 30 Jahre danach gelang die industrielle Herstellung ungezuckerter, ebenfalls haltbarer Kondensmilch, die bis heute vor allem als Zugabe in Filterkaffee beliebt ist.

In der Regel wir die Milch zur Keimabtötung und Albuminabstabilisierung für 10 bis 25 Minuten auf 85 bis 100 °C erhitzt und anschließend bei Unterdruck und 40 bis 80 °C eingedickt, wobei rund 60 % des Wassers entzogen werden. Danach hat sie einen Fettgehalt von etwa 4 bis 10 % und eine fettfreie Trockenmasse von etwa 23 %. Nach der Homogenisierung wird sie in Dosen, Flaschen, Getränkekartons oder Plastikportionspackungen abgefüllt und zur Verlängerung der Haltbarkeit noch einmal sterilisiert.

Bei der gezuckerten Variante wird nach dem Wasserentzug bis zu einer Konzentration von 45 % Zucker hinzugegeben, was ursprünglich zur Verhinderung des Bakterienwachstums notwendig war.

Im Verlauf des Herstellungsverfahrens, beispielsweise nach der Homogenisierung, wir dem Produkt typischerweise ein Hydrokolloid und ein Puffer zugesetzt. Das Hydrokolloid erhöht die Viskosität; durch den Puffer wird Calcium absorbiert und Kalium freigesetzt, der pH-Wert leicht reduziert und konsequenterweise die Viskosität erhöht. Zusammenfassend lässt sich feststellen, dass die enthaltenen Proteine aufquellen und das enthaltene Calcium in Form von löslichen Calciumproteinkomplexen bindet.

Von Nachteil ist jedoch, dass die Milch infolge des hohen Aschegehaltes, also des Gehaltes an Mineralien wie Natrium und Kalium, einen bitteren Geschmack aufweist, der durch Zugabe von Süßungsmitteln ausgeglichen werden muss. Ebenfalls nachteilig ist, dass infolge des hohen Mineralanteils eine große Menge an Puffer benötigt wird, was ebenfalls unerwünscht ist, weil dadurch die geschmackliche Qualität des Produktes beeinträchtigt werden kann.

### RELEVANTER STAND DER TECHNIK

Gegenstand der EP 0433474 B1 (NESTLE) ist ein Verfahren zur Herstellung einer stabilisierten Kondensmilch, bei dem man Vollmilch oder Magermilch ein Lactoseprodukt mit einem Gehalt an Phospholipiden zusetzt. Die so versetzte Milch wird wärmebehandelt, aufkonzentriert, homogenisiert und pasteurisiert. Die Stabilisierung betrifft jedoch nicht das Aufrahmen, außerdem ist der Zusatz dieser Additive in der Anwendung zu teuer, erhöht die Süße des Produktes erheblich und führt Laktose ein, wo dieser Stoff vielfach nicht erwünscht ist.

Aus der EP 0517941 B1 (NESTLE) ist ein weiteres Verfahren zur Herstellung von Kondensmilch bekannt. Dabei wird eine Standardmilch in zwei Ströme aufgeteilt, von denen jedoch nur einer homogenisiert wird. Anschließend wird dieser mit dem zweiten nicht homogenisierten Strom wie vermischt. Die Mischung wird anschließend wärmebehandelt, konzentriert, homogenisiert und abschließend sterilisiert.

Gegenstand der EP 627169 B1 (FRIESLAND) ist ein Verfahren zur Herstellung von Kondensmilch, bei dem man wiederum eine Standardmilch zunächst bei 50 bis 100° wärmebehandelt, dann homogenisiert und ein weiteres Mal erhitzt. Anschließend erfolgt das Eindampfen und Sterilisieren.

Das Dokument US 5 503 865 A (NESTEC SA) betrifft ein Verfahren zur Herstellung einer Milchzusammensetzung; das Verfahren zeichnet sich dadurch aus, dass man eine entrahmte Milch durch Ultrafiltration oder Mikrofiltration auf ein Drittel bis ein Sechstel des Volumens konzentriert und dass man im Retentat eine Lactosemenge löst, die, bezogen auf das Gewicht, ungefähr der Trockenmassemenge des Retentats entspricht.

Das Dokument US 2007/0166447 A1 (Fairlife, LLC) betrifft ein Verfahren zur Herstellung von Milchprodukten aus fraktionierten Milchbestandteilen. Dabei wird ein durch Ultrafiltration gewonnenes Permeat einer Nanofiltration unterworfen.

Schließlich wird in der EP 1209980 B1 (NESTEC) beschrieben, wie man durch Zugabe von Molke zu Rohmilch über die genannten Zwischenschritte ebenfalls eine Kondensmilch erhält, die kostengünstiger in der Herstellung ist, aber keine geschmacklichen Defizite aufweist.

### AUFGBE DER ERFINDUNG

Die Aufgabe der vorliegenden Erfindung hat daher darin bestanden, ein Verfahren zur Herstellung einer Kondensmilch zur Verfügung zu stellen, welches frei von den oben geschilderten Nachteilen ist. Insbesondere sollte die Milch frei von mineralisch-bitteren Geschmacksnoten sein und einen geringeren Puffergehalt aufweisen.

### BESCHREIBUNG DER ERFINDUNG

Gegenstand der Erfindung ist ein Verfahren zur Herstellung von Kondensmilch bestehend aus den folgenden Schritten:
(a) Bereitstellung einer Rohmilch oder Vollmilch;
(b) Abtrennung des Rahms von der Vollmilch in an sich bekannter Weise unter Erhalt einer Magermilch- und einer Rahmfraktion;
(c) Ultrafiltration der Magermilchfraktion aus Schritt (b) unter Erhalt eines proteinreichen und teildemineralisierten Retentats R1 und eines an Proteinen verarmten Permeats P1;
(d) Nanofiltration des Permeats P1 aus Schritt (c) unter Erhalt eines mineralreichen Permeats P2 und eines an Mineralien verarmten Retentats R2;
(e) Demineralisieren des Retentats R2 aus Schritt (d) und Abtrennung des dabei anfallenden Calciumphosphats;
(f) Versetzen des demineralisierten Retentates R1 aus Schritt (e) mit wenigstens einem Teil der Rahmfraktion aus Schritt (b) und wenigstens einem Teil des proteinreichen und teildemineralisierten Retentat R1 aus Schritt (c);
(g) Entwässern des demineralisierten Produktes aus Schritt (f) unter Erhalt eines Konzentrats;
(h) Versetzen des Konzentrates aus Schritt (g) mit Carrageen (E 407) und mindestens einem Puffer ausgewählt aus der Gruppe bestehend aus Carbonatpuffer (Carbonat/Bicarbonat) und Phosphatpuffer unter Erhalt einer Mischung, wobei Carrageen (E 407) und Puffer in Mengen von jeweils etwa 0,01 bis etwa 0,5 Gew.-%, jeweils bezogen auf das Konzentrat, zusetzt werden;
(i) Homogenisierung der Mischung aus Schritt (h) unter Erhalt eines Homogenisats; und
(j) Pasteurisieren des Homogenisats aus Schritt (i).

Überraschenderweise wurde gefunden, dass durch zwei zusätzliche Verfahrensschritte, nämlich einmal durch eine Kombination von Ultra- und Nanofiltration und zum anderen durch einen Demineralisierungsschritt, die Nachteile des Stands der Technik überwunden werden. Zum einen werden Natrium und Kalium abgetrennt, und zum anderen wird der Phosphatgehalt bis fast auf null gesenkt, was eine geringe Menge an Pufferflüssigkeit erfordert, um einen annähernd neutralen pH-Wert sicherzustellen.

### SEPARATION

Unter Separation wird die Abtrennung des Rahms bis auf einen Fettanteil von etwa 0,05 Gew.-% in der Magermilch sowie die Entfernung von Feststoffen verstanden. Das Verfahren kann sowohl in der Wärme bei einer Temperatur im Bereich von etwa 20 bis etwa 60 °C oder in der Kälte bei einer Temperatur von etwa 8 bis etwa 18 °C durchgeführt werden.

Im erfindungsgemäßen Verfahren ist es von Vorteil, die Separation kalt durchzuführen. Dabei ist es vorteilhaft, wenn die Temperatur des kalten Zustandes der Rohmilch durch Wärmeaustausch mit einem Wärmeträgermedium auf einen für ihre Separation optimalen Wert eingestellt wird. Normalerweise steht die Rohmilch in einem gekühlten Zustand zur Verfügung, dessen Temperatur nicht dem Wert entspricht, bei dem ihre Kaltseparation am wirkungsvollsten und für das Milchfett (Rahm) am schonendsten betrieben werden kann. Deshalb wird sie durch den Wärmeaustausch auf den für ihre Separation optimalen Wert eingestellt. Die dabei anfallende Austauschkälte kann insbesondere durch eine sogenannte Wärmeschaukel anderen Prozessen, die innerhalb eines Molkereibetriebs ablaufen, zur Verfügung gestellt werden. Beispielsweise ist die Temperatur der gekühlten Rohmilch nicht höher als 6 °C, während die für die Kaltseparation optimale Temperatur im Bereich von 8 bis 18 °C und insbesondere 8 bis 12 °C liegt. In diesem Fall erfolgt der Wärmeaustausch durch Anwärmen der Rohmilch, damit die Temperatur ihres kalten Zustandes auf einen in diesem Bereich liegenden Wert angehoben wird. Normalerweise liegt in Molkereibetrieben ein Wärmeüberschuss vor. Deshalb kann als Wärmeträgermedium für das Anwärmen Niedrigtemperaturwasser, das in Prozessen des Molkereibetriebes anfällt, verwendet werden. Dieses Niedrigtemperaturwasser wird dem Wärmeaustauschprozess mit einer Temperatur, die beispielsweise im Bereich von 35 °C liegt, zugeführt und kühlt sich durch den Wärmeaustausch auf eine Temperatur, die beispielsweise im Bereich von 11 bis 15 °C liegt, ab. Dadurch stellt das erfindungsgemäße Verfahren eine wichtige Kältequelle für Prozesse des Molkereibetriebs zur Verfügung.

Wird die Separation in der Wärme durchgeführt, liegt die bevorzugte Temperatur im Bereich von etwa 45 bis etwa 60 °C, vorzugsweise im Bereich von etwa 50 bis 55 °C.

Die Abtrennung von Feststoffen sowie die Entrahmung des Fettanteils von etwa 4 Gew.-% erfolgen üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die Feststoffabtrennung einzeln oder gemeinsam durchgeführt werden können (http://www.westfalia-separator.com/de/anwendungen/molkereitechnik/milch-molke.html). Bevorzugte Kaltmilchseparatoren werden von diesem Hersteller unter der Bezeichnung "Procool" angeboten. Entsprechende Bauteile sind beispielsweise auch in der DE 10036085 C1 und der DE 10361526 B3 (Westfalia) beschrieben und dem Fachmann bestens bekannt, so dass es zur Durchführung dieser Verfahrensschritte keiner Erläuterungen bedarf, da sie dem allgemeinen Fachwissen zuzurechnen sind.

Vorzugsweise erfolgt die Abtrennung der Rahmfraktion in einem Plattenwärmeaustauscher mit angeschlossenem Separator vornimmt.

### ULTRA- UND NANOFILTRATION

Ultra- und Nanofiltration sind Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 10 und 80 bar liegt.

Die Ausschlussgrenzen von Ultrafiltrationsmembranenen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Die Nanofiltration bevorzugt Porendurchmesser im Bereich von 100 bis 2.000 und vorzugsweise etwa 250 bis 1.000 Dalton.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Ultrafiltration und die Nanofiltration können im Sinne der vorliegenden Erfindung unabhängig voneinander "heiß" oder "kalt", d.h. im Temperaturbereich von etwa 6 bis etwa 60 °C durchgeführt werden. Bevorzugt ist es jedoch, bei Temperaturen im niedrigen Bereich von etwa 6 bis etwa 20 °C zu arbeiten.

### DEMINERALISIERUNG

Unter Demineralisierung ist im Kontext der vorliegenden Erfindung eine möglichst vollständige Abtrennung der in der Milch enthaltenen Phosphate zu verstehen. Um dies zu erreichen, wird die protein- und fettfreie Milch (Retentat der Nanofiltration) in der Regel durch Zugabe von Basen zunächst auf einen annähernd neutralen pH-Wert im Bereich von 6 bis 8 eingestellt und die Mineralien, die im Wesentlichen lösliche Phosphate darstellen mit einer solchen Menge einer Lösung eines wasserlöslichen Calciumsalzes versetzt, dass schwerlösliche Calciumsalze gefällt werden. Zur Einstellung eines alkalischen pH-Wertes und zur Fällung werden NaOH, eine wässrige Zubereitung aus Calciumchlorid und Alkalihydroxid oder Calciumhydroxid einsetzt. Grundsätzlich können zur Einstellung des pH-Wertes auch andere Alkali- oder Erdalkalibasen, wie z.B.-KOH eingesetzt werden. Auch die Natur des Fällungssalzes ist an sich unkritisch, es lassen sich beispielsweise Bariumsalze fällen. Die Verwendung von Calciumsalzen hat indes den Vorteil, dass das Fällungsmittel kostengünstig und die Salze ein sehr niedriges Löslichkeitsprodukt haben, die Fällung also im Wesentlichen vollständig ist. Auch ohne Zugabe von Fällungsmitteln erfolgt die Demineralisierung in Rührkesseln, wobei es sich als vorteilhaft erwiesen hat, eine Temperatur im Bereich von etwa 50 bis 90 und vorzugsweise von etwa 80 °C einzustellen. Die Fällungszeit liegt typischerweise bei etwa 20 bis 120 und vorzugsweise etwa 30 bis 45 min, wobei diese Angaben nur als Anhaltspunkte zu verstehen sind, da niedrigere Temperaturen längere Reaktionszeiten erfordern und umgekehrt. Nach der Fällung werden die Salze abgetrennt, beispielsweise in Separatoren, welche das größere spezifische Gewicht der gefällten Partikel ausnutzen. Es ist aber ebenso möglich, die Abtrennung beispielsweise durch Membranfilter im Rahmen einer weiteren Ultrafiltration im Bereich 5.000 bis 150.000 Dalton, vorzugsweise 10.000 bis 50.000 Dalton vorzunehmen.

### STANDARDISIERUNG

An die Demineralisierung schließt sich eine Standardisierung an. Unter Standardisierung ist zu verstehen, dass dem demineralisierten Zwischenprodukt so viel von dem zuvor abgetrennten Rahm zugesetzt wird, wie dies aus anwendungstechnischer Sicht oder durch Normen vorgegeben erforderlich ist. Üblicherweise wird eine solche Menge zugesetzt, so dass das Endprodukt zwischen 3 und 12 Gew.-% und insbesondere etwa 4 Gew.-% Fett in der Trockenmasse aufweist. Ferner wird auch eine Menge des Ultrafiltration-Retentats R1 zugesetzt, so dass der Proteingehalt des Endproduktes dem Proteingehalt der ursprünglichen Rohmilch oder Vollmilch entspricht. Mit anderen Worten: in diesem Schritt wird zum einem eine Menge an Fett zugegeben, die der Menge an Fett des Endproduktes entspricht, und zum anderem eine Menge an Proteinen, die dem Proteingehalt der ursprünglichen Rohmilch oder Vollmilch entspricht.

### KONZENTRIERUNG

Die wie oben beschrieben erhaltene Standardmilch wird entwässert. Die Entwässerung erfolgt vorzugsweise in so genannten "Fallfilmverdampfern". Üblicherweise wird die Standardmilch so aufkonzentriert, dass etwa 15 bis etwa 25 Gew.-% und insbesondere etwa 18 Gew.-% fettfreie Trockenmasse vorliegen.

### ADDITIVIERUNG

Nach dem Eindampfen werden dem Konzentrat Additive zugegeben, die die Aufgabe haben, das enthaltene Eiweiß vor dem Ausflocken zu bewahren. Dazu nutzt man insbesondere Puffer, die Calcium absorbieren und Kalium freisetzen, den pH-Wert leicht reduzieren und konsequenterweise die Viskosität erhöhen; die Puffer lassen Proteine aufquellen und dann wasserlösliche Calciumproteinkomplexe bilden. Ferner werden Hydrokolloide zugegeben, die für eine Erhöhung der Viskosität beitragen.

Als Hydrokolloid kommt Carrageen (E 407) in Frage.

Als Puffer kommen Carbonatpuffer (Carbonat/Bicarbonat) und Phosphatpuffer in Frage. Insbesondere bevorzugt im Sinne der vorliegenden Erfindung ist Phosphatpuffer.

Der Einsatz von Carrageen, und Puffern, speziell Phosphatpuffer, ist gemeinsam, wobei deren Einsatzmenge jeweils etwa 0,01 bis etwa0,5 Gew.-%, vorzugsweise etwa 0,02 bis etwa 0,3 Gew.-% und insbesondere etwa 0,05 bis etwa 0,1 Gew.-% - jeweils bezogen auf das Konzentrat - betragen kann.

### HOMOGENISIERUNG UND PASTEURISIERUNG

Die Homogenisierung der Zwischenprodukte kann in an sich bekannter Weise in Rührkesseln erfolgen. Die Homogenisierzeit beträgt zwischen 30 und 120 Minuten.

Anschließend werden entweder die Homogenisate oder die Kondensate einer Kurzzeit-Hochtemperaturbehandlung unterworfen und dabei pasteurisiert. Typisch sind Bedingungen von etwa 1 bis etwa7 Minuten bei 120 bis 125 °C. Bevorzugt ist eine Erhitzung über 3-6 Minuten auf 121 °C.

Die Ultrahocherhitzung kann beispielsweise durch Direct Steam Injection (DSI) erfolgen. Dies hat den Vorteil, dass das langsame Durchlaufen eines Temperaturbereiches, in dem mesophile und thermophile Sporen optimale Wachstumsbedingungen vorfinden, durch eine blitzartige Erwärmung signifikant verkürzt wird. Dies wird durch die direkte Einspritzung von heißem oder sogar überhitztem Wasserdampf erreicht, der eine Temperatur von 100 bis etwa 250 °C aufweisen kann. Üblicherweise erfolgt dies mit Hilfe von Düsen, die entweder direkt in das Produkt eintauchen oder in einer Ableitung des Wärmeaustauschers eingebaut sind.

Das Prinzip von DSI besteht darin, dass ein unter Druck stehender hocherhitzter Wasserdampfstrahl in eine Düsenkammer geleitet wird und sich dann durch ein perforiertes Rohr ("Radial Steam Jet Diffuser") in das zu erhitzende flüssige Produkt entspannt. Der Hochdruckstrom erzeugt ein sich mit hoher Geschwindigkeit ausbreitendes radiales Wärmeaustauschfeld, wodurch eine gleichmäßige Erhitzung des Produktes in sehr kurzen Zeiten erreicht wird.

Alternativ kann man das Produkt auch durch (Dampf-)Infusion pasteurisiert. Dieses Verfahren ist seit den 1960er Jahren bekannt. Grundsätzlich kann die Erwärmung in zwei Schritten durchgeführt werden, wobei das zu erhitzende Gut in eine mit Heißdampf gefüllte Druckkammer eingedüst wird und die Erwärmung bzw. Pasteurisierung auf dem Fallweg der Tröpfchen erfolgt. Seit dem Jahr 2000 hat indes der so genannte PDX-Prozess an Bedeutung gewonnen. Dabei wird das zu erwärmende Gut vaporisiert und in einem Strom überhitzten Wasserdampfs schlagartig erwärmt. Der sich mit Überschallgeschwindigkeit vorwärtsbewegende Dampfstrom verteilt die Produkttröpfchen homogen, so dass ein Mehrphasenstrom entsteht, wobei die Erhitzung schonend nur an den Grenzflächen der Tröpfchen stattfindet. Auf diese Weise gleichzeitig wird eine Kondensation der Tröpfchen bewirkt. Der Wasserdampf kann dabei eine Temperatur von etwa 100 bis etwa 250 °C und insbesondere etwa 120 bis etwa 150 °C aufweisen, die Infusion benötigt eine Zeit von typisch 1 bis 5 und insbesondere etwa 2 bis 3 Sekunden.

Nach der Pasteurisierung wird die so erhaltene Kondensmilch steril abgefüllt. Falls gewünscht können die Verpackungen dann ein weiteres Mal erhitzt werden, um die Lagerzeit zu verlängern. Grundsätzlich ist es auch möglich, die Pasteurisierung selbst erst mit der verpackten Ware vorzunehmen, was insbesondere dann möglich ist, wenn es sich bei den Verpackungen um Glasflaschen oder Konserven handelt.

Schließlich kann das gesamte Verfahren batchweise oder kontinuierlich betrieben werden. Ebenfalls ist es möglich, die Verfahrensweisen zu mischen, also beispielsweise die Schritte (a) bis (d) batchweise zu gestalten und die Schritte (e) bis (h) dann kontinuierlich zu gestalten.

### BEISPIELE

### VERGLEICHSBEISPIEL 1

### Herstellung von Kondensmilch nach dem Stand der Technik

5.000 I Rohmilch wurden bei 55 °C kontinuierlich über eine Kombination aus Plattenwärmeaustauscher und Separator geleitet und dabei entstaubt und entrahmt. Die resultierende Magermilch wurde unter Zugabe eines Teils des zuvor abgetrennten Rahms auf einen Fettgehalt von 2 Gew.-% in der Trockenmasse eingestellt. Die so standardisierte Milch wurde in einen Fallfilmverdampferentwässert, bis ein Gehalt von 18 Gew.-% fettfreie Trockenmasse und 4 Gew.-% Fett erreicht war. Danach wurde dem Konzentrat 0,5 kg einer 10 Gew-% wässrigen Carrageenlösung und 1,5 kg einer wässrigen Phosphatpufferlösung zugegeben, so dass sich ein pH-Wert von etwa 6,4 einstellte. Anschließend wurde die Mischung 30 Minuten in einem Rührkessel homogenisiert und dann einer Kurzzeiterhitzung (3 Minuten, 121 °C) unterworfen, bevor das so pasteurisierte Produkt unter sterilen Bedingungen in Glasflaschen abgefüllt wurde.

### BEISPIEL 1

5.000 I Rohmilch wurden bei 55 °C kontinuierlich über eine Kombination aus Plattenwärmeaustauscher und Separator geleitet und dabei entstaubt und entrahmt. Die resultierende Magermilch wurde bei 20 °C einer Ultrafiltration unter Einsatz einer Spiralwickelmembran mit einer mittleren Porenweite von 5.000 Dalton unterworfen und das Retentat abgetrennt. Das Permeat wurde dann einer Nanofiltration unter Einsatz einer Keramikmembran mit einer mittleren Porenweite von 1.000 Dalton unterworfen. Das mineralreiche Permeat wurde abgeführt und resultierende Retentat bei 80 °C über 45 Minuten mit einer alkalischen Calciumchloridlösung behandelt. Nach dem Abtrennen der ausgefallenen Calciumsalze wurde das demineralisierte Retentat mit einer Menge des Ultrafiltration-Retentats zugesetzt, so dass der Proteingehalt des Endproduktes dem Proteingehalt der ursprünglichen Rohmilch oder Vollmilch entspricht, und mit einer Menge an dem zuvor abgetrennten Rahm, so dass die Menge an zugesetzem Fett, der Menge an Fett des gewünschten Endproduktes entspricht. Das standardisierte Produkt wurde in einen Fallfilmverdampfer entwässert, bis ein Gehalt von 18 Gew.-% fettfreie Trockenmasse und 4 Gew.-% Fett erreicht war. Danach wurde dem Konzentrat 0,5 kg einer 10 Gew-% wässrigen Carrageenlösung und 0,5 kg einer wässrigen Phosphatpufferlösung zugegeben, so dass sich ein pH-Wert von etwa 6,4 einstellte. Anschließend wurde die Mischung 30 Minuten in einem Rührkessel homogenisiert und dann einer Kurzzeiterhitzung (3 Minuten, 121 °C) unterworfen, bevor das so pasteurisierte Produkt unter sterilen Bedingungen in Glasflaschen abgefüllt wurde.

### ANWENDUNGSTECHNISCHE BEURTEILUNG

Beide Muster wurden einem sogenannten Stresstest unterworfen, bei dem die Produkte unter drastischen Bedingungen gelagert wurden, um die Effizienz des erfindungsgemäßen Verfahrens und der erfindungsgemäßen Produkte deutlich zu demonstrieren. Demzufolge wurden beide Muster 8 Wochen bei 30°C gelagert und anschließend bezüglich des Geschmacks von 5 geschulten Testern beurteilt. Die Mittelwerte der Beurteilungen sind in **Tabelle 1** zusammengefasst. Dabei bedeutet von 1 nach 5 aufsteigend eine zunehmende Übereinstimmung mit dem Geschmack von Magermilch bzw. eine zunehmende bittere Geschmacksnote.

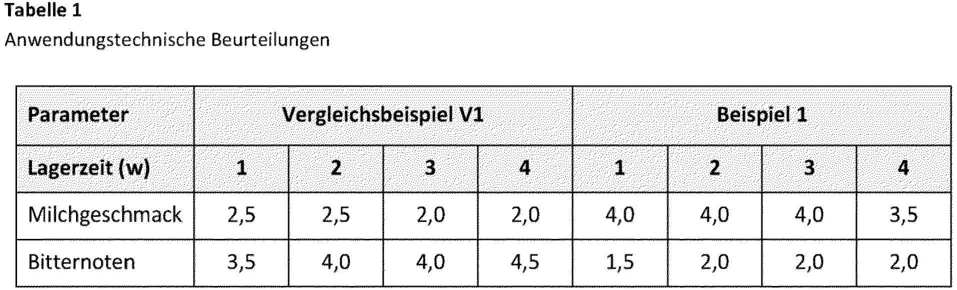

Die Befunde zeigen, dass das Vergleichsprodukt einen Geschmackseindruck hinterlässt, der sich von frischer Magermilch deutlich unterscheidet und dies über die Lagerzeit mit abnehmender Tendenz. Gleichzeitig ist ein deutlicher Bittergeschmack festzustellen, der sich allmählich auch noch verstärkt. Das erfindungsgemäße Produkt ist hingegen Magermilch geschmacklich sehr ähnlich und praktisch frei von bitteren Geschmacksnoten

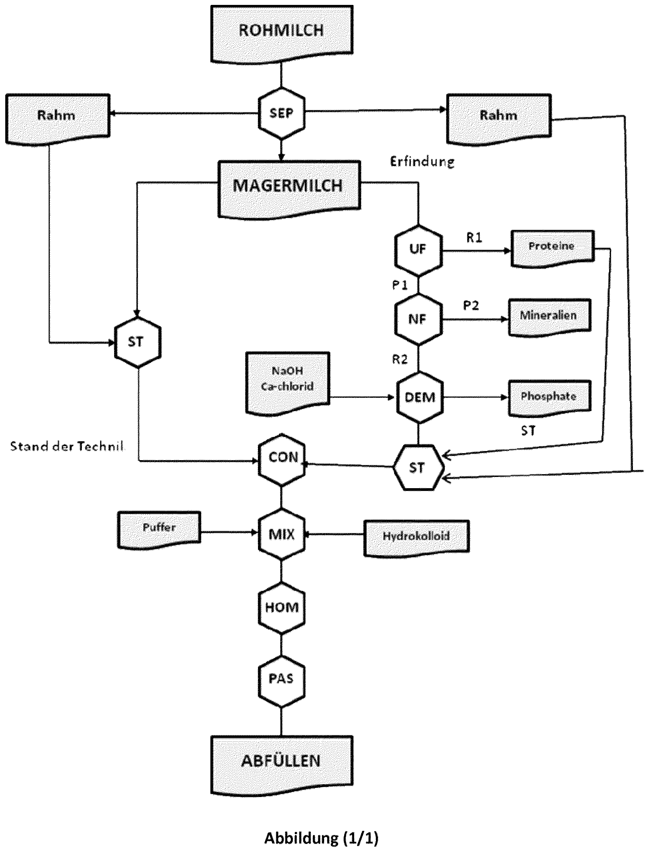

Die Erfindung wird an Hand des Schemas in der **Abbildung 1** noch einmal verdeutlich; der linke Ast zeigt den Stand der Technik, der rechte das erfindungsgemäße Verfahren. Die Abkürzungen bedeuten:
- SEP: : Separation
- UF: : Ultrafiltration
- NF: : Nanofiltration
- DEM: : Demineralisierung
- CON: : Konzentration
- MIX: : Vermischung
- HOM: : Homogenisierung
- PAS: : Pasteurisierung

## Patentansprüche

1. Verfahren zur Herstellung von Kondensmilch bestehend aus den folgenden Schritten:
(a) Bereitstellung einer Rohmilch oder Vollmilch;
(b) Abtrennung des Rahms von der Vollmilch in an sich bekannter Weise unter Erhalt einer Magermilch- und einer Rahmfraktion;
(c) Ultrafiltration der Magermilchfraktion aus Schritt (b) unter Erhalt eines proteinreichen und teildemineralisierten Retentats R1 und eines an Proteinen verarmten Permeats P1;
(d) Nanofiltration des Permeats P1 aus Schritt (c) unter Erhalt eines mineralreichen Permeats P2 und eines an Mineralien verarmten Retentats R2;
(e) Demineralisieren des Retentats R2 aus Schritt (d) und Abtrennung des dabei anfallenden Calciumphosphats;
(f) Versetzen des demineralisierten Retentates R1 aus Schritt (e) mit wenigstens einem Teil der Rahmfraktion aus Schritt (b) und wenigstens einem Teil des proteinreichen und teildemineralisierten Retentat R1 aus Schritt (c);
(g) Entwässern des demineralisierten Produktes aus Schritt (f) unter Erhalt eines Konzentrats;
(h) Versetzen des Konzentrates aus Schritt (g) mit Carrageen (E 407) und mindestens einem Puffer ausgewählt aus der Gruppe bestehend aus Carbonatpuffer (Carbonat/Bicarbonat) und Phosphatpuffer unter Erhalt einer Mischung, wobei Carrageen (E 407) und Puffer in Mengen von jeweils etwa 0,01 bis etwa 0,5 Gew.-%, jeweils bezogen auf das Konzentrat, zusetzt werden;
(i) Homogenisierung der Mischung aus Schritt (h) unter Erhalt eines Homogenisats; und
(j) Pasteurisieren des Homogenisats aus Schritt (i).

2. Verfahren nach Anspruch 1, **dadurch gekennzeichnet, dass** man die Ultrafiltration mit Membranen durchführt, die einen mittleren Porendurchmesser von etwa 5.000 bis etwa 50.000 Dalton aufweisen.

3. Verfahren nach en Ansprüchen 1 und/oder 2, **dadurch gekennzeichnet, dass** man die Nanofiltration mit Membranen durchführt, die einen mittleren Porendurchmesser von etwa 100 bis etwa 2.000 Dalton aufweisen.

4. Verfahren nach mindestens einem der Ansprüche 1 bis 3, **dadurch gekennzeichnet, dass** man die Ultrafiltration und/oder Nanofiltration unabhängig voneinander bei einer Temperatur im Bereich von etwa 6 bis etwa 60 °C durchführt.

5. Verfahren nach mindestens einem der Ansprüche 1 bis 4, **dadurch gekennzeichnet, dass** man die Demineralisierung durch Zugabe von Calciumsalzen unter alkalischen Bedingungen bei Temperaturen im Bereich von etwa 50 bis etwa 90 °C durchführt.

6. Verfahren nach mindestens einem der Ansprüche 1 bis 5, **dadurch gekennzeichnet, dass** man das demineralisierte Produkt durch Zugabe von Rahm und vom Ultrafiltration-Retentat R1 standardisiert.

7. Verfahren nach mindestens einem der Ansprüche 1 bis 6, **dadurch gekennzeichnet, dass** man das Produkt aufkonzentriert, so dass etwa 15 bis etwa 25 Gew.-% fettfreie Trockenmasse vorliegen.

8. Verfahren nach mindestens einem der Ansprüche 1 bis 7, **dadurch gekennzeichnet, dass** man den Homogenisaten einen Phosphatpuffer zusetzt.

9. Verfahren nach mindestens einem der Ansprüche 1 bis 8, **dadurch gekennzeichnet, dass** man die Homogenisate über einen Zeitraum von etwa 1 bis etwa 7 Minuten auf 120 bis 125 °C erhitzt und dabei pasteurisiert.

10. Verfahren nach mindestens einem der Ansprüche 1 bis 9, **dadurch gekennzeichnet, dass** man die Kondensmilch nach der Pasteurisierung steril abfüllt und die verpackte Ware gegebenenfalls ein weiteres Mal erhitzt.

11. Verfahren nach mindestens einem der Ansprüche 1 bis 10, **dadurch gekennzeichnet, dass** man es batchweise oder ganz oder teilweise kontinuierlich betreibt.

## Claims

1. Process for the preparation of condensed milk consisting of the following steps:
(a) providing a raw milk or whole milk;
(b) separating the cream from the whole milk in a manner known per se to obtain a skimmed milk fraction and a cream fraction;
(c) ultrafiltration of the skimmed milk fraction from step (b) to obtain a protein-rich and partially mineralized retentate R1 and a protein-depleted permeate P1;
(d) nanofiltration of the permeate P1 from step (c) to obtain a mineral-rich permeate P2 and a mineral-depleted retentate R2;
(e) demineralizing the retentate R2 from step (d) and separating the resulting calcium phosphate;
(f) mixing the demineralized retentate R1 from step (e) with at least a portion of the cream fraction from step (b) and at least a portion of the protein-rich and partially demineralized retentate R1 from step (c);
(g) dewatering the demineralized product from step (f) to obtain a concentrate;
(h) adding carrageenan (E 407) and at least one buffer selected from the group consisting of carbonate buffer (carbonate/bicarbonate) and phosphate buffer to the concentrate from step (g) to obtain a mixture, wherein carrageenan (E 407) and buffer are each added in amounts of about 0.01 to about 0.5% by weight, in each case based on the concentrate;
(i) homogenizing the mixture from step (h) to obtain a homogenate; and
(j) pasteurizing the homogenizate from step (i).

2. Process according to claim 1, **characterized in that** the ultrafiltration is carried out with membranes having an average pore diameter of about 5,000 to about 50,000 Daltons.

3. Process according to claims 1 and/or 2, **characterized in that** the nanofiltration is carried out with membranes which have an average pore diameter of about 100 to about 2,000 Daltons.

4. Process according to at least one of claims 1 to 3, **characterized in that** the ultrafiltration and/or nanofiltration is carried out independently of one another at a temperature in the range from about 6 to about 60 °C.

5. Process according to at least one of claims 1 to 4, **characterized in that** the demineralization is carried out by adding calcium salts under alkaline conditions at temperatures in the range from about 50 to about 90 °C.

6. Process according to at least one of claims 1 to 5, **characterized in that** the demineralized product is standardized by adding cream and the ultrafiltration retentate R1.

7. Process according to at least one of claims 1 to 6, **characterized in that** the product is concentrated so that about 15 to about 25% by weight of fat-free dry matter is present.

8. Process according to at least one of claims 1 to 7, **characterized in that** a phosphate buffer is added to the homogenates.

9. Process according to at least one of claims 1 to 8, **characterized in that** the homogenizates are heated to 120 to 125 °C for a period of about 1 to about 7 minutes and pasteurized in the process.

10. Process according to at least one of claims 1 to 9, **characterized in that** the condensed milk is sterilely filled after pasteurization and the packaged product is heated a further time if necessary.

11. Process according to at least one of claims 1 to 10, **characterized in that** it is operated batchwise or continuously in whole or in part.

## Revendications

1. Procédé de préparation de lait concentré comprenant les étapes suivantes :
(a) fournir d'un lait cru ou d'un lait entier ;
(b) séparation de la crème du lait entier d'une manière connue en soi pour obtenir une fraction de lait écrémé et une fraction de crème ;
(c) ultrafiltration de la fraction de lait écrémé obtenue à l'étape (b) pour obtenir un rétentat R1 riche en protéines et partiellement minéralisé et un perméat P1 appauvri en protéines ;
(d) nanofiltration du perméat P1 de l'étape c) pour obtenir un perméat P2 riche en minéraux et un rétentat R2 appauvri en minéraux ;
(e) déminéralisation du rétentat R2 obtenu à l'étape d) et séparation du phosphate de calcium obtenu ;
(f) mélanger le rétentat déminéralisé R1 de l'étape (e) avec au moins une partie de la fraction de crème de l'étape (b) et au moins une partie du rétentat R1 riche en protéines et partiellement déminéralisé de l'étape (c) ;
(g) déshydratation du produit déminéralisé de l'étape f) pour obtenir un concentré ;
(h) ajouter du carraghénane (E 407) et au moins un tampon choisi dans le groupe constitué du tampon carbonate (carbonate/bicarbonate) et du tampon phosphate au concentré de l'étape (g) pour obtenir un mélange, dans lequel le carraghénane (E 407) et le tampon sont chacun ajoutés en quantités d'environ 0,01 à environ 0,5 % en poids, dans chaque cas sur la base du concentré ;
(i) homogénéiser le mélange obtenu à l'étape h) pour obtenir un homogénat ; et
(j) pasteurisation de l'homogénat obtenu à l'étape i).

2. Procédé selon la revendication 1, **caractérisé par le fait que** l'ultrafiltration est effectuée avec des membranes dont le diamètre moyen des pores est compris entre environ 5 000 et environ 50 000 daltons.

3. Procédé selon les revendications 1 et/ou 2, **caractérisé par le fait que** la nanofiltration est réalisée avec des membranes dont le diamètre moyen des pores est compris entre 100 et 2 000 daltons environ.

4. Procédé selon l'une au moins des revendications 1 à 3, **caractérisé par le fait que** l'ultrafiltration et/ou la nanofiltration sont effectuées indépendamment l'une de l'autre à une température comprise entre environ 6 et environ 60 °C.

5. Procédé selon l'une au moins des revendications 1 à 4, **caractérisé en ce que** la déminéralisation est effectuée par l'ajout de sels de calcium dans des conditions alcalines à des températures comprises entre 50 et 90 °C environ.

6. Procédé selon l'une au moins des revendications 1 à 5, **caractérisé par le fait que** le produit déminéralisé est standardisé en ajoutant de la crème et le rétentat d'ultrafiltration R1.

7. Procédé selon l'une au moins des revendications 1 à 6, **caractérisé par le fait que** le produit est concentré de manière à contenir de 15 à 25 % environ en poids de matière sèche dégraissée.

8. Procédé selon l'une au moins des revendications 1 à 7, **caractérisé par** l'ajout d'un tampon phosphate aux homogénats.

9. Procédé selon l'une au moins des revendications 1 à 8, **caractérisé par le fait que** les homogénats sont chauffés à une température de 120 à 125 °C pendant une période d'environ 1 à 7 minutes et pasteurisés au cours du procédé.

10. Procédé selon l'une au moins des revendications 1 à 9, **caractérisé par le fait que** le lait concentré est rempli de manière stérile après la pasteurisation et que le produit emballé est chauffé une nouvelle fois si nécessaire.

11. Procédé selon au moins l'une des revendications 1 à 10, **caractérisé par le fait qu'**il fonctionne par lots ou en continu, en totalité ou en partie.
